# EUROPEAN PATENT APPLICATION

(11) **EP 4 842 063 A1**
(43) Date of publication of application: **18.11.2026**
(21) Application number: 25846623.4
(22) Date of filing: 16.06.2025
(51) Int. Cl.: H04W 36/10

(54) **STATION ROAMING METHOD AND APPARATUS, ACCESS CONTROLLER, AND MEDIUM**

(30) Priority: 01.08.2024 CN 202411052409
(71) Applicant: Ruijie Networks Co., Ltd., Fuzhou, Fujian 350002 (CN)
(72) Inventor: LEI, Chen, Fuzhou, Fujian 350002 (CN)
(74) Representative: Boult Wade Tennant LLP
(86) International application number: PCT/CN2025/101246
(87) International publication number: WO 2026/026276

(57) **Abstract**

This application provides a wireless station roaming method and apparatus, an access controller, and a medium. The method is applied to a first AC. The method includes: in response to a first wireless station STA accessing any wireless access point AP managed by the first AC, when it is determined that the first STA is not associated with the first AC, sending a roaming query request to at least one neighboring AC, where the at least one neighboring AC is an AC whose signal coverage area is adjacent to a signal coverage area of the first AC; and when response information sent by a target neighboring AC is received, allowing the first STA to roam between the first AC and the target neighboring AC.

## Description

### CROSS-REFERENCE TO RELATED APPLICATIONS

This application claims priority to Chinese Patent Application No. 202411052409.8, filed with the China National Intellectual Property Administration on August 1, 2024 and entitled "WIRELESS STATION ROAMING METHOD AND APPARATUS, ACCESS CONTROLLER, MEDIUM, AND PROGRAM PRODUCT", which is incorporated herein by reference in its entirety.

### TECHNICAL FIELD

This application relates to the field of wireless communication technologies, and in particular, to a wireless station roaming method and apparatus, an access controller, and a medium.

### BACKGROUND

Roaming of a wireless station (Station, STA) between access controllers (English: Access Controllers, ACs for short) involves inter-AC interaction, and a tunnel needs to be established between a roaming-in AC and a roaming-out AC to implement the roaming. In a scenario of networking with a large quantity of distributed ACs, a roaming group is configured, and a plurality of specified ACs are added to the same roaming group, so that the STA can roam between ACs. When the STA accesses any wireless access point (English: Access Point, AP for short), an AC to which the AP belongs, that is, the roaming-in AC, sends a query request to each AC in the same roaming group. Upon receiving the query request, if an AC in the same roaming group determines that the STA was previously associated with the AC, the AC responds to the query request, so that the STA performs inter-AC roaming between the roaming-out AC and the roaming-in AC.

### SUMMARY

This application provides a wireless station roaming method and apparatus, an access controller, a medium, and a program product.

According to a first aspect, this application provides a wireless station roaming method. The method is applied to a first access controller AC. The method includes:
in response to a first wireless station STA accessing any wireless access point AP managed by the first AC, if it is determined that the first STA is not associated with the first AC, sending a roaming query request to at least one neighboring AC respectively, where the at least one neighboring AC is an AC whose signal coverage area is adjacent to a signal coverage area of the first AC; and
if response information sent by a target neighboring AC is received, allowing the first STA to roam between the first AC and the target neighboring AC.

In some embodiments, the sending the roaming query request to the at least one neighboring AC respectively includes:
if it is determined that a type of the accessed AP is a border AP, or if it is determined that a type of the accessed AP is an inland AP and that the first STA accesses the accessed AP by using a reassociation request frame, sending the roaming query request to all neighboring ACs of the first AC respectively.

In some embodiments, the sending the roaming query request to the at least one neighboring AC respectively includes:
if it is determined that a type of the accessed AP is a border AP, sending the roaming query request to each neighboring AC having a mapping relationship with the accessed AP.

In some embodiments, the method further includes:
if it is determined that a type of the accessed AP is an inland AP and that the first STA accesses the accessed AP by using an association request frame, associating with the first STA according to an initial association policy.

In some embodiments, after the sending the roaming query request to the at least one neighboring AC respectively, the method further includes:
if no response information is received within a second preset duration, associating with the first STA according to the initial association policy.

In some embodiments, the method further includes:
determining the at least one neighboring AC corresponding to the first AC by exchanging foreign AP information within a first preset duration after the first AC is powered on;
   and/or
determining the at least one neighboring AC corresponding to the first AC by learning a roaming trajectory within the first preset duration after the first AC is powered on.

In some embodiments, a roaming domain virtual local area network VLAN includes a plurality of ACs, and the plurality of ACs include the first AC; and the determining the at least one neighboring AC corresponding to the first AC by exchanging the foreign AP information within the first preset duration after the first AC is powered on includes:
performing the following operations within the first preset duration after the first AC is powered on, until the first preset duration is reached, where the following operations include:
obtaining neighboring AP information reported by a first AP managed by the first AC, where the neighboring AP information includes AP identifiers respectively corresponding to neighboring APs identified by the first AP;
when the neighboring AP information includes an identifier of a foreign AP that does not belong to the first AC, adding the identifier of the foreign AP to a foreign AP list, and broadcasting the foreign AP list within the roaming domain VLAN; and
if response information sent by a second AC for the foreign AP list is received, determining that the second AC is a neighboring AC, where the response information is sent by the second AC to the first AC when the second AC determines that the foreign AP list includes an identifier corresponding to an AP belonging to the second AC.

In some embodiments, a roaming domain VLAN includes a plurality of ACs, and the plurality of ACs include the first AC; and the determining the at least one neighboring AC corresponding to the first AC by learning the roaming trajectory within the first preset duration after the first AC is powered on includes:
performing the following operations within the first preset duration after the first AC is powered on, until the first preset duration is reached, where the following operations include:
in response to a second STA accessing a first AP managed by the first AC, if it is determined that the second STA is not associated with the first AC, broadcasting a roaming query request within the roaming domain VLAN; and
if response information sent by a third AC is received, determining that the third AC is a neighboring AC.

In some embodiments, the method further includes:
if the response information sent by the third AC is received within a second preset duration, allowing the second STA to roam between the first AC and the third AC; and
if the response information is not received within the second preset duration, associating with the second STA according to an initial association policy.

In some embodiments, the method further includes: in a process of determining the at least one neighboring AC corresponding to the first AC, determining a type of the first AP, and writing the type of the first AP into an internal AP list, where the type is a border AP or an inland AP, both the inland AP and each neighboring AP of the inland AP are APs managed by the first AC, and at least one of neighboring APs of the border AP is not an AP managed by the first AC; and
if the type of the first AP is a border AP, storing a mapping relationship between the first AP and a corresponding neighboring AC, where the corresponding neighboring AC is an AC to which a neighboring AP that does not belong to the first AC and that is among neighboring APs of the first AP belongs.

In some embodiments, if the at least one neighboring AC corresponding to the first AC is determined by exchanging the foreign AP information, the determining the type of the first AP in the process of determining the at least one neighboring AC corresponding to the first AC includes:
when the neighboring AP information reported by the first AP includes an identifier of a foreign AP that is not managed by the first AC, determining that the type of the first AP is a border AP; and/or
when AP identifiers in the neighboring AP information reported by the first AP each belong to APs managed by the first AC, or the neighboring AP information reported by the first AP includes an identifier of a foreign AP that does not belong to the first AC and no response information is received within a second preset duration, determining that the type of the first AP is an inland AP.

In some embodiments, if the at least one neighboring AC corresponding to the first AC is determined by learning the roaming trajectory, the determining the type of each first AP in the process of determining the at least one neighboring AC corresponding to the first AC includes:
after the roaming query request is broadcast within the roaming domain VLAN, if response information sent by a third AC is received within a second preset duration, determining that a type of the accessed AP is a border AP; and
if no response information is received within the second preset duration, determining that the type of the accessed AP is an inland AP.

In some embodiments, the sending the roaming query request to the at least one neighboring AC respectively includes:
in response to a quantity of ACs included in the roaming domain VLAN being greater than a first preset threshold, sending the roaming query request to the at least one neighboring AC respectively, where the neighboring AC is determined by exchanging the foreign AP information and by learning the roaming trajectory.

In some embodiments, the sending the roaming query request to the at least one neighboring AC respectively includes:
in response to the quantity of ACs included in the roaming domain VLAN being less than or equal to the first preset threshold and a configured sending manner being sending a request to a neighboring AC, sending the roaming query request to the at least one neighboring AC respectively, where the neighboring AC is determined by learning the roaming trajectory.

In some embodiments, the method further includes:
in response to the quantity of ACs included in the roaming domain VLAN being less than or equal to the first preset threshold and the configured sending manner being broadcasting a request in a roaming domain, broadcasting the roaming query request in the roaming domain VLAN; and
if response information sent by a fourth AC is received, allowing the first STA to roam between the first AC and the fourth AC.

In some embodiments, receiving the response information sent by the target neighboring AC includes:
receiving the response message sent by the target neighboring AC through a tunnel between the first AC and the target neighboring AC.

In some embodiments, the allowing the first STA to roam between the first AC and the target neighboring AC includes:
establishing, by the first AC, an association with the first STA based on the response message, to allow the first STA to roam between the first AC and the target neighboring AC.

According to a second aspect, this application provides a wireless station roaming apparatus. The apparatus is disposed in a first access controller AC. The apparatus includes:
a sending module, configured to: in response to a first wireless station STA accessing any wireless access point AP managed by the first AC, if it is determined that the first STA is not associated with the first AC, send a roaming query request to at least one neighboring AC respectively, where the at least one neighboring AC is an AC whose signal coverage area is adjacent to a signal coverage area of the first AC; and
a roaming module, configured to: if response information sent by a target neighboring AC is received, allow the first STA to roam between the first AC and the target neighboring AC.

According to a third aspect, this application provides an access controller, including a processor and a memory communicatively connected to the processor, where
the memory stores computer-executable instructions; and
the processor executes the computer-executable instructions stored in the memory, to implement the wireless station roaming method according to any one embodiment of the first aspect.

According to a fourth aspect, this application provides a computer-readable storage medium. The computer-readable storage medium stores computer-executable instructions. When executed by a processor, the computer-executable instructions are used to implement the wireless station roaming method according to any one embodiment of the first aspect.

According to a fifth aspect, this application provides a computer program product, including a computer program. When the computer program is executed by a processor, the wireless station roaming method according to any one embodiment of the first aspect is implemented.

According to the wireless station roaming method and apparatus, access controller, medium, and program product provided in this application, when the first STA accesses any AP managed by the first AC, if it is determined that the first AC is not associated with the first STA, it indicates that the first STA previously did not connect to a wireless network through the first AC. In this case, the at least one neighboring AC corresponding to the first AC may be obtained, and the roaming query request is sent only to the at least one neighboring AC. If response information sent by any one of the at least one neighboring AC is received, the first STA is allowed to roam between the first AC and the target neighboring AC that sends the response information. The neighboring AC is defined as an AC whose signal coverage area is adjacent to the signal coverage area of the first AC. In this way, a quantity of unnecessary query requests is reduced, thereby reducing a total amount of data transmitted, reducing bandwidth usage, and further reducing overall network load. On this basis, compared with a solution in which one AC is designated as a master controller, this application avoids reliance on a single master controller by using a distributed query mechanism, thereby lowering requirements on device performance and reducing costs. On this basis, compared with a solution in which ACs in a roaming group synchronize respective station lists with each other, a roaming query request is sent to a neighboring AC only when needed in this application, instead of synchronizing all station lists, thereby reducing storage pressure on the ACs.

### BRIEF DESCRIPTION OF DRAWINGS

To describe the technical solutions in the embodiments of this application or in the related art more clearly, the following briefly describes the accompanying drawings required for describing the embodiments or the prior art. It is clear that the accompanying drawings in the following description show merely some of the embodiments of this application, and a person of ordinary skill in the art may still derive other drawings of embodiments from these accompanying drawings without creative efforts. The accompanying drawings herein are incorporated into this specification and form a part of this specification. They illustrate embodiments conforming to this application and are intended to explain the principles of this application together with this specification.
FIG. 1 is a schematic diagram of an application scenario according to an embodiment of this application;
FIG. 2 is a schematic flowchart of determining at least one neighboring AC corresponding to a first AC by exchanging foreign AP information according to an embodiment of this application;
FIG. 3 is a schematic flowchart of determining at least one neighboring AC corresponding to a first AC by learning a roaming trajectory according to an embodiment of this application;
FIG. 4 is a schematic diagram illustrating coverage areas of ACs according to an embodiment of this application;
FIG. 5 is another schematic diagram illustrating coverage areas of ACs according to an embodiment of this application;
FIG. 6 is a schematic flowchart of a wireless station roaming method according to an embodiment of this application;
FIG. 7 is a schematic diagram of a wireless station roaming scenario according to an embodiment of this application;
FIG. 8 is a schematic diagram of a structure of a wireless station roaming apparatus according to an embodiment of this application; and
FIG. 9 is a schematic diagram of a structure of an access controller according to an embodiment of this application.

Embodiments of this application have been illustrated clearly in the foregoing drawings, and will be described in more detail hereinafter. These drawings and text descriptions are not intended to limit the scope of the conception of this application in any manner, but to illustrate the concept of this application to a person skilled in the art by referring to specific embodiments.

### DESCRIPTION OF EMBODIMENTS

Exemplary embodiments are described in detail herein, and examples of the exemplary embodiments are presented in the accompanying drawings. When the following description relates to the accompanying drawings, unless otherwise specified, same numbers in different accompanying drawings represent same or similar elements. Implementations described in the following exemplary embodiments do not represent all implementations consistent with this application. On the contrary, they are merely examples of apparatuses and methods that are described in the appended claims in detail and that are consistent with some aspects of this application.

The terms "first" and "second" are merely for the purpose of description, and shall not be understood as an indication or implication of relative importance or an implicit indication of a quantity of indicated technical features. In the descriptions of the following embodiments, "a plurality of" means at least two unless otherwise specifically defined.

In a thin AP architecture, an AP and an AC usually communicate through a tunneling protocol, and the AP transmits received wireless data to the AC through a tunnel for processing. For example, the tunneling protocol is the Control And Provisioning of Wireless Access Points Protocol Specification (English: Control And Provisioning of Wireless Access Points Protocol Specification, CAPWAP for short) protocol.

Roaming of a STA between thin APs is classified into intra-AC roaming and inter-AC roaming. In intra-AC roaming, an entire roaming process is controlled by a single AC. Inter-AC roaming involves interaction between ACs, and a tunnel needs to be established between a roaming-in AC and a roaming-out AC. Roaming entry information of a STA is exchanged through the tunnel, so that the STA can achieve fast roaming. As can be known to a person skilled in the art, the roaming entry information of the STA received by the roaming-in AC includes an online service set identifier (English: Service Set identifier, SSID for short), a pairwise master key identifier (English: Pairwise Master Key Identifier, PMKID for short), an authentication mode, a security authentication mode, a roaming VLAN, and the like. Based on the roaming entry information of the STA, the roaming-in AC may allow the STA to go online without authentication, thereby improving roaming efficiency. If the roaming-in AC cannot obtain the roaming entry information of the STA, the STA needs to associate with a roaming-in AP and complete association operations such as authentication, which is time-consuming. In a scenario of networking with a large quantity of distributed ACs, there may be more inter-AC roaming requirements between areas.

One practice in the related art is to configure a roaming group, and add a plurality of specified ACs to a same roaming group, indicating that a STA may roam between the ACs. When the STA accesses any AP, an AC to which the AP belongs, that is, a roaming-in AC, sends a query request to each AC in the same roaming group. After receiving the query request, if an AC in the same roaming group determines that the STA is in a station list of this AC, the AC interacts with the roaming-in AC in response to the query request, sends a response message, and sends roaming entry information of the STA to the roaming-in AC. The response message includes the roaming entry information of the STA. This practice has a drawback. Because the roaming-in AC needs to send query requests to all other ACs in the same roaming group, but only one AC (that is, the roaming-out AC) may respond, there are many unnecessary requests.

To address the foregoing drawback, one solution in the related art is to designate one AC in a same roaming group as a master controller. The master controller stores station lists of all ACs in the roaming group. When a STA accesses an AP, a roaming-in AC sends a query request to the master controller, and the master controller determines, based on the stored station lists of the ACs, an AC to which the STA belongs, and sends roaming entry information of the STA to the roaming-in AC, so that the STA achieves roaming between the two ACs. This approach has high requirements on performance of the master controller, and may require a model with higher performance than those of other ACs, resulting in higher costs. Another solution in the related art is that ACs in a roaming group synchronize respective station lists with each other, and each AC stores station lists of other ACs in the roaming group, so that when a STA accesses an AP, a roaming-in AC determines an AC to which the STA belongs, and searches for information about the STA. In this approach, each AC needs to store the station lists of the other ACs in the same roaming group, which increases storage pressure on the ACs. In addition, because each AC needs to synchronize its station list, real-time performance is poor.

For two ACs that can implement inter-AC roaming, their signal coverage areas are adjacent. A signal coverage area refers to a sum of signal coverage areas of APs managed by an AC. When a STA accesses an AP, a roaming-in AC is an AC to which the accessed AP belongs, and a roaming-out AC is highly likely to be an AC whose signal coverage area is adjacent to a signal coverage area of the roaming-in AC. It can be learned that the roaming-in AC only needs to send roaming query requests to several neighboring ACs, instead of sending a roaming query request to every AC in the roaming group.

This application provides a wireless station roaming solution. When a first STA accesses any AP managed by a first AC, if it is determined that the first AC is not associated with the first STA, it indicates that the first STA previously did not connect to a wireless network through the first AC. In this case, the first AC may send a roaming query request only to at least one neighboring AC. If response information sent by any one of the at least one neighboring AC is received, roaming entry information of the first STA sent by a target neighboring AC that sends the response information is received through a tunnel, thereby implementing roaming of the first STA between ACs. The neighboring AC is defined as an AC whose signal coverage area is adjacent to a signal coverage area of the first AC. In this way, a quantity of unnecessary query requests is reduced, thereby reducing a total amount of data transmitted, reducing bandwidth usage, and further reducing overall network load. Compared with a solution in which one AC is designated as a master controller, the solution of embodiments of this application avoids reliance on a single master controller by using a distributed query mechanism, thereby lowering requirements on device performance and reducing costs. Compared with a solution in which ACs in a roaming group synchronize respective station lists with each other, a roaming query request is sent to a neighboring AC only when needed in this application, instead of synchronizing all station lists, thereby reducing storage pressure on the ACs.

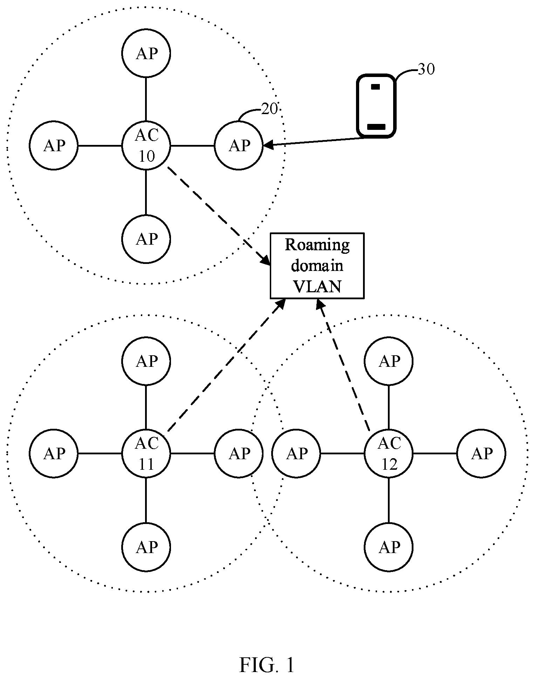

FIG. 1 is a schematic diagram of an application scenario according to an embodiment of this application. As shown in FIG. 1, the application scenario is a wireless local area network architecture, including a plurality of ACs: an AC 10, an AC 11, and an AC 12.

The AC 10 is used as an example. The AC 10 is configured to centrally manage and control a plurality of APs 20, and the APs 20 are configured to perform direct wireless communication with a STA 30.

The plurality of ACs all belong to a same roaming domain virtual local area network (English: Virtual Local Area Network, VLAN for short). During deployment of a wireless local area network architecture, a VLAN may be partitioned from a physical local area network. The VLAN is considered as a roaming domain VLAN (RD-VLAN), and the roaming domain VLAN is configured on each AC, so that the plurality of ACs are located in the same roaming domain VLAN. It should be noted that the roaming domain VLAN may be partitioned by a person skilled in the art based on an actual service requirement. This is not limited in this application.

Because the plurality of ACs all belong to the same roaming domain VLAN, for any AC in the roaming domain VLAN, the AC can broadcast a packet in the roaming domain VLAN, and all other ACs in the roaming domain VLAN can receive the packet. The AC can also receive packets broadcast by other ACs in the roaming domain VLAN, and in response to the received packets, send response information to the ACs broadcasting the packets.

It can be learned that the solution in the related art requires a person skilled in the art to configure each AC in a roaming group in advance, to add all ACs in a same group to the roaming group. For example, if there are 10 ACs in the roaming group, a person skilled in the art needs to add the other 9 ACs to the roaming group on each AC. Such configuration operations are complex. In contrast, this application only requires a person skilled in the art to configure a same roaming domain VLAN on each AC. Therefore, only one configuration operation is required on an AC, and there is no need to configure each AC to add all other ACs in the roaming group to the roaming group, thereby simplifying user configuration operations.

In an application scenario, when the STA 30 accesses any AP 20 in the wireless local area network architecture, the AP 20 uploads relevant information of the STA 30 to an AC to which the STA 30 belongs, and the AC performs the wireless station roaming method provided in this application to implement roaming of the wireless station STA 30.

It should be noted that a quantity of the plurality of ACs may be set based on an actual requirement. This is not limited in this application. For ease of representation, FIG. 1 uses 3 as an example.

The wireless station roaming method provided in this application may be applied to network usage scenarios such as enterprise offices, campuses, and public environments (such as airports, shopping malls, and hotels). This is not limited in this application.

The technical solution of this application and how the technical solution of this application resolves the foregoing technical problem are hereinafter described in detail by using specific embodiments. The specific embodiments below may be combined with each other, and same or similar concepts or processes may not be described again in some embodiments. The following describes embodiments of this application with reference to accompanying drawings.

The wireless station roaming method provided in this application is performed by a wireless station roaming apparatus. The wireless station roaming apparatus is integrated in an AC. As mentioned in the foregoing application scenario, the roaming domain VLAN includes a plurality of ACs. A first AC in the roaming domain VLAN is used as an example for description below, and each AC in the roaming domain VLAN implements the wireless station roaming method in the same manner as the first AC.

In this application, the first AC determines at least one neighboring AC of the first AC within a period of time after being powered on. In an optional embodiment, an implementation of determining the at least one neighboring AC corresponding to the first AC includes: determining the at least one neighboring AC corresponding to the first AC by exchanging foreign AP information within a first preset duration after the first AC is powered on; and/or determining the at least one neighboring AC corresponding to the first AC by learning a roaming trajectory within the first preset duration after the first AC is powered on.

Power-on refers to power-on and startup. The first preset duration may be set based on an actual requirement. This is not limited in this application. For example, the first preset duration is 5 days, 7 days, or 10 days.

A process in which the first AC determines the at least one neighboring AC may be considered as a learning period of the first AC, and a duration of the learning period is the first preset duration. Optionally, the first AC enters the learning period immediately after being powered on, and its trigger mode includes: the first AC automatically enters the learning period after being powered on; or the first AC is manually triggered to enter the learning period after being powered on. Manually triggering the first AC to enter the learning period is specifically implemented as: manually controlling the first AC to enter the learning period on a remote control interface of the first AC; or manually configuring the first AC to enter the learning period on the first AC.

Introduction of the concept of a "learning period" allows the first AC to dynamically identify neighboring ACs in the roaming domain VLAN. This dynamic learning mechanism can adapt more flexibly to changes in a network topology, thereby improving adaptability and scalability.

The foregoing optional embodiment reduces manual configuration requirements by automatically identifying neighboring ACs, reduces workload of a person skilled in the art, and improves efficiency of network deployment and maintenance.

The manner of exchanging foreign AP information and the manner of learning a roaming trajectory are described below respectively.

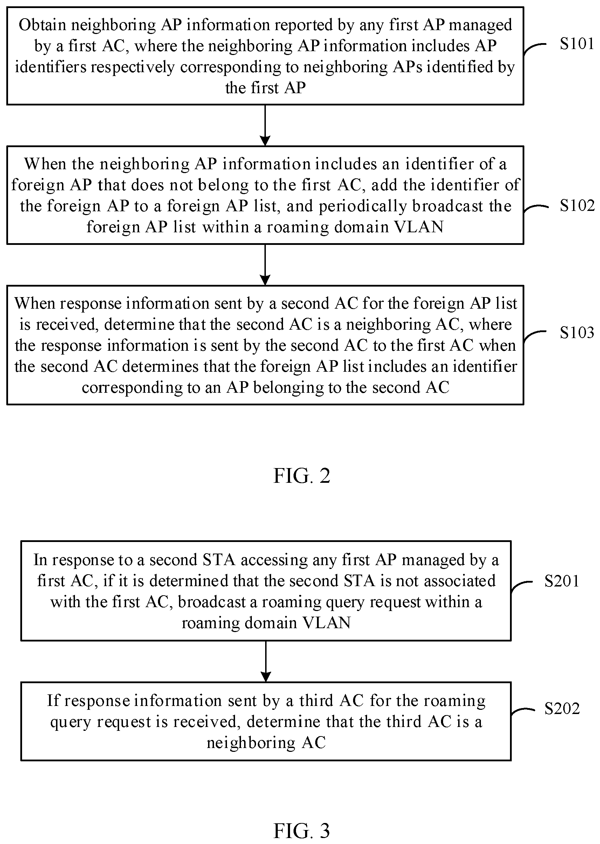

FIG. 2 is a schematic flowchart of determining at least one neighboring AC corresponding to a first AC by exchanging foreign AP information according to an embodiment of this application. As shown in FIG. 2, the process of determining the at least one neighboring AC corresponding to the first AC by exchanging the foreign AP information within the first preset duration after the first AC is powered on includes: performing the following operations within the first preset duration after the first AC is powered on, until the first preset duration is reached. The following operations include step S101 to step S103.

Step S101: Obtain neighboring AP information reported by any first AP managed by the first AC, where the neighboring AP information includes AP identifiers respectively corresponding to neighboring APs identified by the first AP.

The first AC is configured to centrally manage and control a plurality of first APs. After being powered on, the first AC sends an acquisition instruction to each of the managed first APs, so that each of the first APs obtains corresponding neighboring AP information, and reports the obtained neighboring AP information to the first AC.

A neighboring AP of the first AP is an AP located around the first AP. An AP identifier is used to uniquely identify an AP to distinguish different APs. For example, the AP identifier is a basic service set identifier (English: Basic Service Set Identifier, BSSID for short). Optionally, an implementation for the first AP to obtain the neighboring AP information includes: periodic spectrum scanning, scanning using an AI radio card (English: AI Radio), or scanning using the Radio Resource Measurement of Wireless LANs (English: Radio Resource Measurement of Wireless LANs, RRM for short) protocol. For example, the RRM protocol is a function defined by the 802.11k protocol.

Step S102: When the neighboring AP information includes an identifier of a foreign AP that does not belong to the first AC, add the identifier of the foreign AP to a foreign AP list, and periodically broadcast the foreign AP list within the roaming domain VLAN.

In this embodiment of this application, after obtaining the neighboring AP information reported by any first AP, the first AC determines whether the neighboring AP information includes the identifier of the foreign AP that does not belong to the first AC. Optionally, the first AC stores an internal AP list, and the internal AP list includes AP identifiers of APs belonging to the first AC. Correspondingly, determining whether the neighboring AP information includes the identifier of the foreign AP that does not belong to the first AC is specifically implemented as follows: For each AP identifier in the neighboring AP information, the first AC queries whether the internal AP list includes the AP identifier. If the internal AP list includes the AP identifier, an AP indicated by the AP identifier belongs to the first AC. Conversely, if the internal AP list does not include the AP identifier, the AP indicated by the AP identifier does not belong to the first AC, and the AP identifier may be considered as a foreign AP identifier.

When the neighboring AP information includes the identifier of the foreign AP that does not belong to the first AC, it indicates that the AP indicated by the foreign AP identifier is highly likely to belong to an AC adjacent to the first AC. In this case, the foreign AP identifier may be added to the foreign AP list, and the foreign AP list is periodically broadcast within the roaming domain VLAN, so that other ACs in the roaming domain VLAN can receive the foreign AP list broadcast by the first AC.

Optionally, a frequency of periodically broadcasting the foreign AP list may be set based on an actual requirement. This is not limited in this application. For example, the frequency is once every 2 minutes, once every 5 minutes, or once every 10 minutes.

As can be known to a person skilled in the art, the first AC may also broadcast the foreign AP list in the roaming domain VLAN in an aperiodic manner. For example, when a quantity of foreign APs reaches a threshold, the first AC broadcasts the foreign AP list.

Step S103: If response information sent by a second AC for the foreign AP list is received, determine that the second AC is a neighboring AC, where the response information is sent by the second AC to the first AC when the second AC determines that the foreign AP list includes an identifier corresponding to an AP belonging to the second AC.

In this embodiment of this application, after receiving the foreign AP list broadcast by the first AC, an AC in the roaming domain VLAN other than the first AC determines whether the foreign AP list includes an identifier corresponding to an AP belonging to the local AC. Optionally, the second AC is used as an example. The second AC stores an internal AP list, where the internal AP list includes AP identifiers of APs belonging to the second AC. Correspondingly, determining whether the foreign AP list includes an identifier corresponding to an AP belonging to the second AC is specifically implemented as follows: For each foreign AP identifier in the foreign AP list, the second AC queries whether the internal AP list includes the foreign AP identifier. If the internal AP list includes the foreign AP identifier, an AP indicated by the foreign AP identifier belongs to the second AC. Conversely, if the internal AP list does not include the foreign AP identifier, the AP indicated by the foreign AP identifier does not belong to the second AC.

When the foreign AP list includes an identifier corresponding to an AP belonging to the second AC, the second AC sends response information to the first AC to "claim" the foreign AP. The response information includes an AC identifier corresponding to the second AC and the AP identifier corresponding to the AP that is in the foreign AP list and that belongs to the second AC.

Optionally, determining that the second AC is a neighboring AC is specifically implemented as: adding the AC identifier corresponding to the second AC to a neighboring AC list, where the neighboring AC list includes AC identifiers respectively corresponding to neighboring ACs determined by the first AC. An AC identifier is used to uniquely identify an AC to distinguish different ACs. For example, the AC identifier is an Internet Protocol (English: Internet Protocol, IP for short) address or a network identifier of the AC. For example, the network identifier is a media access control (English: Media Access Control, MAC for short) address.

Optionally, after determining that the second AC is a neighboring AC, the first AC further establishes a tunnel with the second AC, so as to communicate through the tunnel subsequently to implement inter-AC roaming. For example, the tunnel is a multicast tunnel interface (English: Multicast Tunnel Interface, MTI for short) tunnel.

For any first AP managed by the first AC, a signal coverage area of the first AP overlaps a signal coverage area of a neighboring AP of the first AP. If the neighboring AP does not belong to the first AC, it indicates that the neighboring AP is highly likely to belong to an AC adjacent to the first AC, and a signal coverage area of the AC overlaps a signal coverage area of the first AC. Therefore, the AC may be considered as an AC whose signal coverage area is adjacent to the signal coverage area of the first AC, that is, a neighboring AC of the first AC.

In this embodiment of this application, the neighboring AC is determined by exchanging foreign AP information. A neighbor discovery capability of an AP is used to automatically obtain and process the neighboring AP information reported by the first AP, so that the first AC can establish a neighbor relationship between ACs within a short time.

Optionally, the first AC may not only enter the learning period immediately after being powered on to determine a neighboring AC, but also reenter the learning period once a new AC joins the roaming domain VLAN after the learning period elapses, to determine the new neighboring AC. A manner of triggering reentering the learning period includes: the first AC automatically enters the learning period in response to a new AC joining the roaming domain VLAN; or the first AC is manually triggered to enter the learning period when a new AC joins the roaming domain VLAN. Manually triggering the first AC to enter the learning period is specifically implemented as: manually controlling the first AC to enter the learning period on a remote control interface of the first AC; or manually configuring the first AC to enter the learning period on the first AC.

A process of determining that a new AC joins the roaming domain VLAN is as follows: All ACs in the roaming domain VLAN are powered on at the same time and enter the learning period, periodically broadcast foreign AP lists during the learning period, and after the learning period elapses, no longer broadcast the foreign AP lists. In this case, it is considered that the determination of neighboring ACs for each AC is complete. After the learning period elapses, if an AC receives a foreign AP list broadcast by any AC, the AC is considered to be an AC newly joining the roaming domain VLAN, and the AC is considered to be in the learning period.

By reentering the learning period when a new AC joins the roaming domain VLAN, the ACs in the roaming domain VLAN can update previously determined neighboring ACs, so that the determined neighboring ACs are more accurate.

FIG. 3 is a schematic flowchart of determining at least one neighboring AC corresponding to a first AC by learning a roaming trajectory according to an embodiment of this application. As shown in FIG. 3, the process of determining the at least one neighboring AC corresponding to the first AC by learning the roaming trajectory within the first preset duration after the first AC is powered on includes: performing the following operations within the first preset duration after the first AC is powered on, until the first preset duration is reached. The following operations include step S201 and step S202.

Step S201: In response to a second STA accessing any first AP managed by the first AC, if it is determined that the second STA is not associated with the first AC, broadcast a roaming query request within the roaming domain VLAN.

The second STA accesses the first AP, and the first AP reports STA information of the second STA to the first AC, where the STA information includes a STA identifier. The STA identifier may be a MAC address.

In a wireless network, association between a STA and an AC refers to a process in which the STA connects to the network through an AP, and the AC manages and controls an access process and subsequent communication of the STA. When the STA accesses an AP for the first time, the AP reports the STA information of the STA to the AC to which the STA belongs, and the AC records the STA in a station list in the AC, indicating that the STA is currently managed by the AC.

Optionally, the first AC stores a station list, and the station list includes STA identifiers respectively corresponding to STAs associated with the first AC; and correspondingly, determining whether the second STA is associated with the first AC is specifically implemented as: determining whether the station list includes a STA identifier corresponding to the second STA, where if the STA identifier corresponding to the second STA is included, it indicates that the second STA is already associated with the first AC; or conversely, if the STA identifier corresponding to the second STA is not included, it indicates that the second STA is not associated with the first AC. As can be known to a person skilled in the art, when the second STA is associated with the first AC, roaming entry information of the second STA is saved in the first AC to implement fast intra-AC roaming and inter-AC roaming.

If it is determined that the second STA is not associated with the first AC, it indicates that the second STA accesses the first AC for the first time, and that the second STA may have been associated with other ACs in the roaming domain VLAN, or may have not been associated with any AC in the roaming domain VLAN. In this case, the first AC broadcasts a roaming query request in the roaming domain VLAN, and all other ACs in the roaming domain VLAN can receive the roaming query request. Compared with a manner in the prior art in which roaming query requests are sent to other ACs in a roaming group respectively, the manner of broadcasting the roaming query request requires the first AC to send the roaming query request only once, thereby reducing the number of request transmissions, reducing a total amount of data transmitted, reducing bandwidth usage, and further reducing network load. The roaming query request carries the STA identifier corresponding to the second STA.

It should be noted that if it is determined that the second STA is already associated with the first AC, it indicates that the second STA previously accessed the first AC. In this case, intra-AC roaming is directly performed.

Step S202: If response information sent by a third AC for the roaming query request is received, determine that the third AC is a neighboring AC.

In this embodiment of this application, an AC in the roaming domain VLAN other than the first AC, after receiving the roaming query request broadcast by the first AC, determines whether the second STA is associated with the local AC. If the second STA is already associated with the local AC, the AC sends response information to the first AC to "claim" the second STA. The response information includes an AC identifier corresponding to the local AC and the STA identifier corresponding to the second STA. Optionally, the third AC is used as an example. The third AC stores a station list, where the station list includes STA identifiers respectively corresponding to STAs associated with the third AC; and correspondingly, if the third AC determines that the station list includes the STA identifier corresponding to the second STA, indicating that the second STA is already associated with the third AC, the third AC sends response information to the first AC; or conversely, if the third AC determines that the station list does not include the STA identifier corresponding to the second STA, indicating that the second STA is not associated with the third AC, the third AC ignores the roaming query request, that is, does not respond to the roaming query request.

Optionally, determining that the third AC is a neighboring AC is specifically implemented as: adding an AC identifier corresponding to the third AC to a neighboring AC list, where the neighboring AC list includes AC identifiers respectively corresponding to neighboring ACs determined by the first AC.

Optionally, after determining that the third AC is a neighboring AC, the first AC further establishes a tunnel with the third AC, so as to communicate through the tunnel subsequently, exchange roaming entry information of the STA, and implement inter-AC roaming of the STA. For example, the tunnel is an MTI tunnel. As can be known to a person skilled in the art, implementing inter-AC roaming refers to communicating through the tunnel to obtain the roaming entry information of the STA, so as to implement fast inter-AC roaming of the STA.

In this embodiment of this application, neighboring ACs are determined by learning the roaming trajectory. The STA can perceive adjacency of signal coverage areas of two ACs only when inter-AC roaming of the STA actually occurs. Therefore, during access of the second STA, a roaming query request is broadcast, and the third AC that responds to the roaming query request is determined as a neighboring AC of the first AC, thereby achieving high accuracy.

The foregoing step S202 is described for a case in which response information is received. Correspondingly, the method provided in this embodiment of this application further includes: if the response information sent by the third AC for the roaming query request is received within a second preset duration, exchanging the roaming entry information of the STA with the third AC through a corresponding tunnel, to implement fast roaming of the STA between the first AC and the third AC. The second preset duration may be set based on an actual requirement. For example, the second preset duration is 50 milliseconds or 60 milliseconds. The first AC is adjacent to the third AC. After receiving the response information, the first AC establishes a tunnel with the third AC, so as to exchange inter-AC roaming entry information of the STA through the tunnel, so that the STA can quickly roam to normally use the wireless network and avoid disconnection.

There is also another case in this embodiment of this application, that is, a case in which no response information is received: if no response information is received within the second preset duration, associating with the second STA according to an initial association policy.

If no response information is received within the second preset duration, it indicates that the second STA is not associated with any AC in the roaming domain VLAN. Therefore, it may be considered that the second STA performs access for the first time. Therefore, the second STA is associated with the first AC according to the initial association policy, so that the second STA can perform intra-AC roaming by using the first AC. For the initial association policy, reference may be made to technical means in the related art in which a STA performs access for the first time and associates with an AC, Details are not described herein in this embodiment of this application. As can be known to a person skilled in the art, when the second STA performs access for the first time and associates with the first AC, the first AC establishes and saves the roaming entry information of the second STA to implement fast intra-AC roaming and inter-AC roaming.

On the basis of the embodiment shown in FIG. 3, this embodiment of this application further provides two supplementary solutions. In one solution, if response information is received within the second preset duration, the first AC may exchange the roaming entry information of the second STA with the third AC through the tunnel, thereby implementing fast roaming of the second STA, ensuring that session information and a status of the second STA can be seamlessly transferred, and improving reliability and efficiency of roaming. In the other solution, if no response information is received within the second preset duration, association with the second STA may be performed according to the initial association policy. This flexible policy ensures that the second STA can perform effective roaming, thereby ensuring network service continuity.

Generally, APs managed by an AC have regional characteristics, that is, APs managed by each AC are physically clustered. A sum of signal coverage areas of APs managed by each AC may be referred to as a "coverage area" of the AC, and the coverage area may be considered as a signal coverage area of the AC.

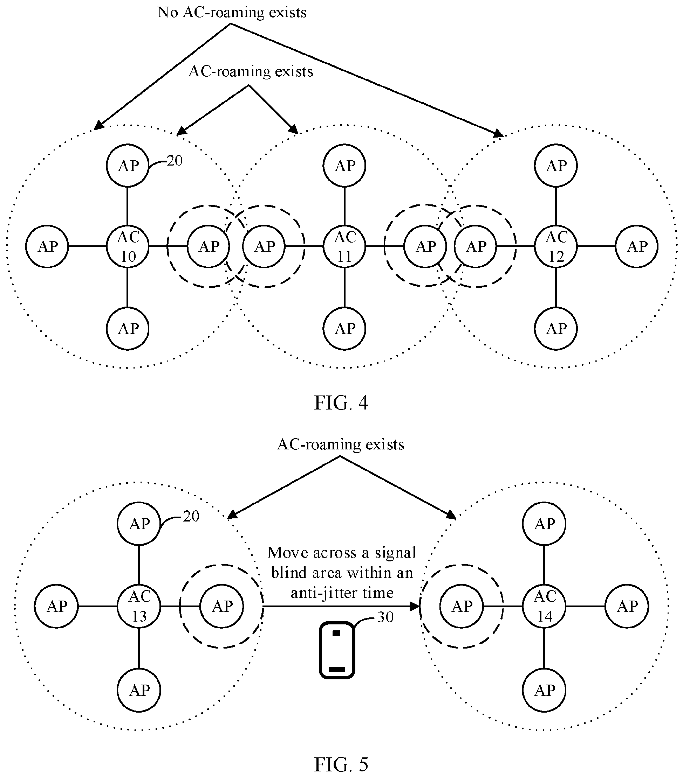

There are two cases of inter-AC roaming. In one case, an overlapping area exists between "coverage areas" of two ACs, and a STA can move through this overlapping area. Referring to a schematic diagram of "coverage areas" of ACs shown in FIG. 4, an overlapping area exists between a "coverage area" of an AC 10 and a "coverage area" of an AC 11, and in this case, a STA may perform inter-AC roaming between the AC 10 and the AC 11; an overlapping area exists between the "coverage area" of the AC 11 and a "coverage area" of an AC 12, and in this case, a STA may perform inter-AC roaming between the AC 11 and the AC 12; no overlapping area exists between the "coverage area" of the AC 10 and the "coverage area" of the AC 12, and in this case, a STA cannot perform inter-AC roaming between the AC 10 and the AC 12. As can be known to a person skilled in the art, for a case in which "coverage areas" of two ACs overlap, neighboring ACs with overlapping "coverage areas" may be determined by using the method shown in FIG. 2 during the learning period of the AC by using neighbor lists of APs; and neighboring ACs may also be determined through query in the roaming domain VLAN by using the method shown in FIG. 3.

In the other case, no overlapping area exists between "coverage areas" of two ACs, and a signal blind area exists between the two ACs, but when a STA 30 moves across the signal blind area, a signal loss time does not exceed an anti-jitter time and therefore is insufficient to cause the STA 30 to go offline due to timeout. In this case, connectivity can be maintained through inter-AC roaming. Referring to a schematic diagram of "coverage areas" of ACs shown in FIG. 5, no overlapping area exists between a "coverage area" of an AC 13 and a "coverage area" of an AC 14, but when a STA 30 moves from the "coverage area" of the AC 13 to the "coverage area" of the AC 14, the STA 30 can move across a signal blind area within an anti-jitter time, so that inter-AC roaming may occur between the AC 13 and the AC 14. Regarding a definition of the anti-jitter time, when the STA 30 leaves a signal coverage area of the AC 13, the AC 13 may maintain an online state of the STA 30 for a period of time. If the STA 30 goes online again within this period of time, it is not considered that the STA 30 goes online after going offline, but is considered that the STA 30 has been online all the time. This period of time is referred to as an anti-jitter time, and the anti-jitter time may be set based on an actual requirement, for example, set to 2 minutes or 5 minutes. As can be known to a person skilled in the art, for a case in which no overlapping area exists between "coverage areas" of two ACs but a signal loss time does not exceed an anti-jitter time, neighboring ACs whose "coverage areas" do not overlap but whose signal loss time does not exceed the anti-jitter time can be determined during the learning period of the AC through query in the roaming domain VLAN by using the method shown in FIG. 3.

It can be learned that a neighboring AC is determined by exchanging foreign AP information. Neighbor discovery capabilities of APs are used to quickly collect information of surrounding APs, so that a neighbor relationship between ACs can be established within a short time, and the determined neighboring AC is an AC whose signal coverage area overlaps the signal coverage area of the first AC. However, a neighboring AC whose signal coverage area does not overlap the signal coverage area of the first AC but whose signal blind area is insufficient to cause a STA to go offline due to timeout cannot be determined in this manner. In contrast, the manner of learning a roaming trajectory can determine a neighboring AC in both of the foregoing cases, but can determine the neighboring AC during access of a STA only. Therefore, neighboring ACs determined by simultaneously using the manner of exchanging foreign AP information and the manner of learning a roaming trajectory are more comprehensive.

On the basis of the embodiments shown in FIG. 2 and FIG. 3, in an optional embodiment, a type of each first AP managed by the first AC may also be determined in the process of determining a neighboring AC. Correspondingly, the wireless station roaming method provided in this application further includes:
in a process of determining the at least one neighboring AC corresponding to the first AC, determining a type of each first AP, and writing the type of each first AP into an internal AP list, where the type is a border AP or an inland AP, both the inland AP and each neighboring AP of the inland AP belong to the first AC, and at least one of neighboring APs of the border AP does not belong to the first AC; and
if a type of any first AP is a border AP, storing a mapping relationship between the first AP and a corresponding neighboring AC, where the corresponding neighboring AC is an AC to which a neighboring AP that does not belong to the first AC and that is among neighboring APs of the first AP belongs.

Optionally, storing the mapping relationship between the first AP and the corresponding neighboring AC is specifically implemented as: adding the mapping relationship between the first AP and the corresponding neighboring AC to the internal AP list; or storing the mapping relationship between the first AP and the corresponding neighboring AC in a border AP mapping relationship table. The border AP mapping relationship table stores mapping relationships between all border APs and corresponding neighboring ACs.

By writing the type of the first AP into the internal AP list, the first AC can update and manage AP information in real time. In addition, by distinguishing between border APs and inland APs, a network administrator may understand a network topology structure more clearly. A border AP is located at borders of different ACs, while an inland AP is completely within a management scope of a same AC. This classification helps visualize the network topology, enabling the network administrator to understand distribution and mutual relationships of APs more intuitively, thereby facilitating network planning and optimization.

In an optional implementation, if the at least one neighboring AC corresponding to the first AC is determined by exchanging the foreign AP information, the implementation of the determining the type of each first AP in the process of determining the at least one neighboring AC corresponding to the first AC includes: when the neighboring AP information reported by the first AP includes an identifier of a foreign AP that does not belong to the first AC, determining that the type of the first AP is a border AP; and/or when all APs identified in the neighboring AP information reported by the first AP belong to the first AC, or the neighboring AP information reported by the first AP includes an identifier of a foreign AP that does not belong to the first AC and no response information is received within the second preset duration, determining that the type of the first AP is an inland AP.

If the neighboring AP information reported by the first AP includes an identifier of a foreign AP that does not belong to the first AC, and the first AC receives response information within the second preset duration, it indicates that the foreign AP indicated by the foreign AP identifier belongs to a neighboring AC of the first AC, and the signal coverage area of the first AP overlaps a signal coverage area of the foreign AP. Correspondingly, the signal coverage area of the first AC overlaps a signal coverage area of the neighboring AC. Therefore, the first AP is located at a border between the first AC and the neighboring AC, and the type of the first AP is a border AP.

If all APs identified in the neighboring AP information reported by the first AP belong to the first AC, it indicates that the signal coverage area of the first AP does not overlap a signal coverage area of any foreign AP. In this case, the first AP is not located at a border between the first AC and any neighboring AC, and the type of the first AP may be considered as an inland AP.

If the neighboring AP information reported by the first AP includes an identifier of a foreign AP that does not belong to the first AC, and the first AC does not receive response information within the second preset duration, it indicates that no AC in the roaming domain VLAN "claims" the foreign AP indicated by the foreign AP identifier. This case may occur because the foreign AP belongs to another manufacturer, or has not joined the roaming domain VLAN yet. Therefore, the type of the first AP may be considered as an inland AP.

For example, initial types of all first APs in the internal AP list are APs with unknown identities. If a first AP cannot detect a foreign AP, the type of the first AP is updated from the initial type to an inland AP; if a first AP can detect a foreign AP, and the foreign AP has been "claimed" by another AC, the type of the first AP is updated from the initial type to a border AP, and a mapping relationship between the first AP and the AC "claiming" the foreign AP is also written into the internal AP list; or if a first AP can detect a foreign AP, but no AC "claims" the foreign AP during the learning period, the type of the first AP is updated from the initial type to an inland AP.

In this embodiment of this application, the border AP and the inland AP are accurately identified by analyzing the neighboring AP information reported by the first AP.

In an optional implementation, if the at least one neighboring AC corresponding to the first AC is determined by learning a roaming trajectory, the implementation of determining the type of each first AP in the process of determining the at least one neighboring AC corresponding to the first AC includes: after the roaming query request is broadcast within the roaming domain VLAN, if response information sent by the third AC for the roaming query request is received within the second preset duration, determining that a type of the accessed AP is a border AP; or if no response information is received within the second preset duration, determining that a type of the accessed AP is an inland AP.

The second STA accesses any AP managed by the first AC, and the AP may be considered as an accessed AP.

If the response information sent by the third AC for the roaming query request is received within the second preset duration, it indicates that the third AC is a neighboring AC of the first AC, and the second STA can perform inter-AC roaming through the accessed AP. Therefore, the type of the accessed AP may be determined as a border AP.

If no response information is received within the second preset duration, it indicates that the second STA is not associated with any AC in the roaming domain VLAN, and that the second STA performs intra-AC roaming through the accessed AP. Therefore, the accessed AP may be determined as an inland AP. It should be noted that if another STA accesses the accessed AP and implements inter-AC roaming through the accessed AP in the process of determining the at least one neighboring AC corresponding to the first AC, the type of the accessed AP may also be updated to a border AP.

In this embodiment of this application, the border AP and the inland AP are distinguished by analyzing whether response information for the roaming query request is received. This manner is simple and easy to implement.

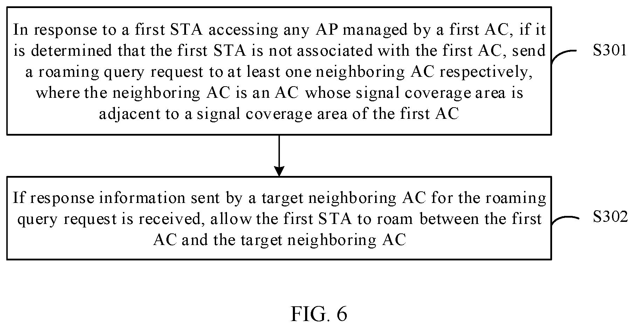

In this embodiment of this application, after determining the at least one neighboring AC corresponding to the first AC, when a STA accesses any AP managed by the first AC, the first AC performs the wireless station roaming method provided in this application to implement roaming of the STA. FIG. 6 is a schematic flowchart of a wireless station roaming method according to an embodiment of this application. As shown in FIG. 6, the method is applied to a first AC. The wireless station roaming method includes the following steps.

Step S301: In response to a first STA accessing any AP managed by the first AC, if it is determined that the first STA is not associated with the first AC, send a roaming query request to at least one neighboring AC respectively, where the neighboring AC is an AC whose signal coverage area is adjacent to a signal coverage area of the first AC.

The first STA accesses the AP, and the AP reports STA information of the first STA to the first AC, where the STA information includes a STA identifier. Optionally, the first AC stores a station list, and the station list includes STA identifiers respectively corresponding to STAs associated with the first AC; and correspondingly, determining whether the first STA is associated with the first AC is specifically implemented as: determining whether the station list includes a STA identifier corresponding to the first STA, where if the STA identifier corresponding to the first STA is included, it indicates that the first STA is already associated with the first AC; or conversely, if the STA identifier corresponding to the first STA is not included, it indicates that the first STA is not associated with the first AC.

If it is determined that the first STA is not associated with the first AC, it indicates that the first STA accesses the first AC for the first time, and that the first STA may have been associated with another AC in a roaming domain VLAN, or may have not been associated with any AC in a roaming domain VLAN. In this case, because the first AC has determined at least one neighboring AC, the first AC may send a roaming query request to the at least one neighboring AC respectively. Specifically, the first AC obtains an AC identifier corresponding to the at least one neighboring AC from the neighboring AC list. In one case, the first AC has established a tunnel with each neighboring AC when determining the neighboring AC. Correspondingly, the first AC sends a roaming query request through the tunnel to the neighboring AC indicated by the obtained at least one AC identifier, to ensure that the roaming query request can be correctly routed to the neighboring AC. The roaming query request carries the STA identifier corresponding to the first STA. In another case, the first AC does not establish a tunnel when determining a neighboring AC, and therefore needs to establish a tunnel with the neighboring AC first before sending a roaming query request.

It should be noted that if it is determined that the first STA is already associated with the first AC, it indicates that the first STA previously accessed the first AC. In this case, intra-AC roaming is directly performed.

Step S302: If response information sent by a target neighboring AC for the roaming query request is received, allow the first STA to roam between the first AC and the target neighboring AC.

The at least one neighboring AC respectively receives the roaming query request sent by the first AC. After receiving the roaming query request sent by the first AC, the at least one neighboring AC first determines whether the first STA is associated with a local AC. Optionally, any neighboring AC is used as an example. The neighboring AC stores a station list, where the station list includes STA identifiers respectively corresponding to STAs associated with the neighboring AC. Correspondingly, determining whether the first STA is associated with the neighboring AC is specifically implemented as: determining whether the station list includes the STA identifier corresponding to the first STA, where if the STA identifier corresponding to the first STA is included, it indicates that the first STA is already associated with the neighboring AC; or conversely, if the STA identifier corresponding to the first STA is not included, it indicates that the first STA is not associated with the neighboring AC.

For ease of distinction, the neighboring AC associated with the first STA is referred to as the target neighboring AC. When the target neighboring AC determines that the first STA is already associated with the target neighboring AC, the target neighboring AC sends the response information for the roaming query request to the first AC to "claim" the first STA. The response information includes an AC identifier corresponding to the target neighboring AC and the STA identifier corresponding to the first STA.

After receiving the response information, the first AC allows the first STA to roam between the first AC and the target neighboring AC. A person skilled in the art may understand that the target neighboring AC may send a response message through a tunnel between the first AC and the target neighboring AC. Correspondingly, the first AC may receive the response message through the tunnel between the first AC and the target neighboring AC.

In this embodiment of this application, when the first STA accesses any AP managed by the first AC, if it is determined that the first AC is not associated with the first STA, it indicates that the first STA previously did not connect to a wireless network through the first AC. In this case, at least one neighboring AC corresponding to the first AC may be obtained, so that a roaming query request is sent only to the at least one neighboring AC. If response information sent by any one of the at least one neighboring AC is received, the first STA is allowed to roam between the first AC and the target neighboring AC that sends the response information. The neighboring AC is defined as an AC whose signal coverage area is adjacent to the signal coverage area of the first AC. In this way, a quantity of unnecessary query requests is reduced, thereby reducing a total amount of data transmitted, reducing bandwidth usage, and further reducing network load. Compared with a solution in which one AC is designated as a master controller, the solution of this embodiment of this application avoids reliance on a single master controller by using a distributed query mechanism, thereby lowering requirements on device performance and reducing costs. Compared with a solution in which ACs in a roaming group synchronize respective station lists with each other, in the solution of this embodiment of this application, a roaming query request is sent to a neighboring AC only when needed in this application, instead of synchronizing all station lists, thereby reducing storage pressure on the ACs.

The foregoing step S302 is described for a case in which response information is received. There is another case in this embodiment of this application, that is, a case in which no response information is received. Correspondingly, after sending the roaming query request to the at least one neighboring AC respectively, the method provided in this embodiment of this application further includes: if no response information is received within a second preset duration, associating with the first STA according to an initial association policy.

If no response information is received within the second preset duration, it indicates that the first STA is not associated with any AC in the roaming domain VLAN. Therefore, it may be considered that the first STA performs access for the first time. Therefore, the first STA is associated with the first AC according to the initial association policy, so that the first STA can perform intra-AC roaming by using the first AC. For the initial association policy, reference may be made to technical means in the related art in which a STA performs access for the first time and associates with an AC, Details are not described herein in this embodiment of this application.

In an optional embodiment, the implementation of sending the roaming query request to the at least one neighboring AC respectively in step S301 includes: if it is determined that a type of the accessed AP is a border AP, or if it is determined that a type of the accessed AP is an inland AP and that the first STA accesses the accessed AP by using a reassociation request frame, sending the roaming query request to all neighboring ACs of the first AC respectively.

The first AC stores an internal AP list, where the internal AP list includes all APs managed by the first AC, and the internal AP list further includes types of all the APs, and the types are border APs or inland APs. Therefore, the first AC may query the internal AP list for the type of the accessed AP.

The request frame used by the STA to access the AP may be an association request frame, or may be a reassociation request frame.

In the first case, if the request frame is an association request frame, indicating that the STA is considered to access the wireless network for the first time currently, there is no need to send a roaming query request to the neighboring AC again. Correspondingly, the method provided in this embodiment of this application further includes: if it is determined that the type of the accessed AP is an inland AP and that the STA accesses the accessed AP by using an association request frame, associating with the STA according to the initial association policy.

In the second case, if the request frame is a reassociation request frame, it indicates that the STA is considered to have accessed the wireless network previously and that the STA currently accesses the wireless network again. Therefore, the STA is highly likely to have been associated with an AC in the roaming domain VLAN. Therefore, when the type of the accessed AP is a border AP, or the type of the accessed AP is an inland AP but the STA uses a reassociation request frame, a roaming query request may be sent to each neighboring AC.

By sending the roaming query request to all neighboring ACs respectively, it is ensured that all possible inter-AC roaming paths are covered, thereby improving reliability and a success rate of roaming.

In an optional embodiment, the first AC further stores mapping relationships between APs of the border AP type and corresponding neighboring ACs. If it is determined that the type of the accessed AP is a border AP, a roaming query request may also be sent to each neighboring AC having a mapping relationship with the accessed AP.

The first AC may query the internal AP list or a border AP mapping relationship table for neighboring ACs having mapping relationships with the accessed AP. By sending a roaming query request only to each neighboring AC having a mapping relationship with the accessed AP, a quantity of unnecessary query requests is further reduced, and query efficiency is improved.

In this embodiment of this application, a manner of learning a roaming trajectory can determine both a neighboring AC whose coverage area overlaps a coverage area of the AC and a neighboring AC whose coverage area does not overlap the coverage area of the AC, thereby achieving high accuracy, but relies on access of the STA, resulting in a slow determination and taking a long time. A manner of exchanging foreign AP information does not rely on access of the STA, and therefore can quickly determine a neighboring AC, but can determine only a neighboring AC whose coverage area overlaps the coverage area of the AC; however, it is difficult to determine all neighboring ACs, and accuracy is not high. Considering that a quantity of ACs in the roaming domain VLAN may be large or small, the operation of sending the roaming query request to the at least one neighboring AC respectively in step S301 can also be performed based on the quantity of ACs, specifically including the following two cases.

In the first case, in response to the quantity of ACs included in the roaming domain VLAN being greater than a first preset threshold, the roaming query request is sent to the at least one neighboring AC respectively, where the neighboring AC is determined by exchanging the foreign AP information and by learning the roaming trajectory. The first preset threshold may be set based on a requirement. For example, the first preset threshold is 4, 5, or 6. The quantity of ACs included in the roaming domain VLAN being greater than the first preset threshold indicates that the quantity of ACs is large. In this case, the neighboring AC may be determined by exchanging the foreign AP information and learning the roaming trajectory jointly. In this way, a neighboring AC can be quickly determined, and all neighboring ACs can be determined with high accuracy.

In the second case, in response to the quantity of ACs included in the roaming domain VLAN being less than or equal to the first preset threshold, the roaming query request is sent to the at least one neighboring AC respectively, where the neighboring AC is determined by learning the roaming trajectory. The quantity of ACs included in the roaming domain VLAN being less than or equal to the first preset threshold indicates that the quantity of ACs is small. In this case, the neighboring AC may be determined only by learning the roaming trajectory. In this way, high accuracy is achieved, and processing resources of the first AC can also be saved.

Optionally, when the quantity of ACs included in the roaming domain VLAN is less than or equal to the first preset threshold, a manner in which the first AC sends a roaming query request may also be configured in advance, and may be configured as a manner of sending a request to a neighboring AC, or may be configured as a manner of broadcasting a request in a roaming domain.

In one case, in response to the quantity of ACs included in the roaming domain VLAN being less than or equal to the first preset threshold and the configured sending manner being sending a request to a neighboring AC, the roaming query request is sent to the at least one neighboring AC respectively, where the neighboring AC is determined by exchanging the foreign AP information or by learning the roaming trajectory.

In another case, in response to the quantity of ACs included in the roaming domain VLAN being less than or equal to the first preset threshold and the configured sending manner being broadcasting a request in a roaming domain, the roaming query request is broadcast in the roaming domain VLAN; and if response information sent by any AC for the roaming query request is received, the first STA is allowed to roam between the first AC and the AC. In this implementation, the first AC neither needs to learn a neighboring AC, nor needs to maintain information related to the neighboring AC, thereby reducing a learning process in an early stage.

In this embodiment of this application, the first AC can dynamically adjust a policy based on a network scale, that is, based on the quantity of ACs included in the roaming domain VLAN, featuring high flexibility.

Referring to FIG. 1, during the learning period, the AC 10, the AC 11, and the AC 12 determine at least one neighboring AC respectively. If a STA 30 accesses any AP 20, an AC to which the AP 20 belongs broadcasts a roaming query request within the roaming domain VLAN.

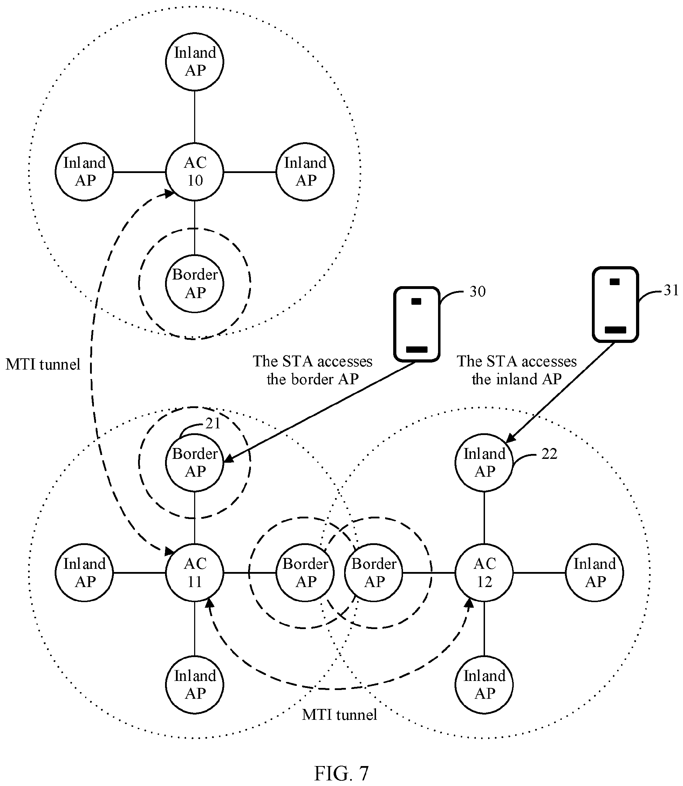

Referring to a wireless station roaming scenario shown in FIG. 7, the AC 10 and the AC 11 have determined a neighbor relationship according to the manner of learning a roaming trajectory during the learning period, and have established an MTI tunnel; and the AC 11 and the AC 12 have determined a neighbor relationship according to the manner of exchanging AP information during the learning period, and have established an MTI tunnel. Correspondingly, outside the learning period, if a STA 30 accesses a border AP 21 managed by the AC 11, a roaming query request is sent only to at least one neighboring AC respectively; or if a STA 31 accesses an inland AP 22 managed by the AC 12, a roaming manner is further selected based on a request frame used by the STA 30.

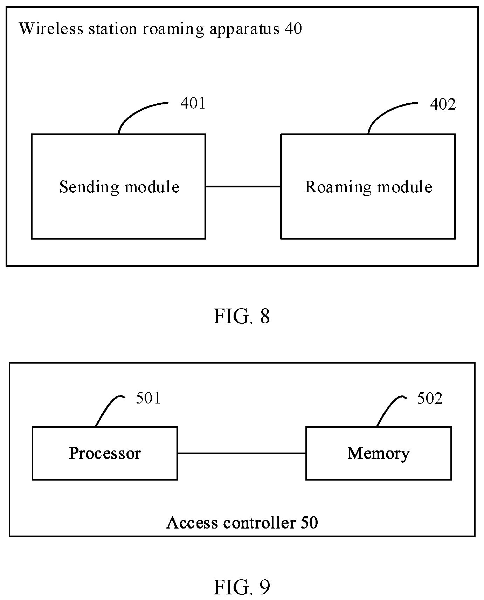

FIG. 8 is a schematic diagram of a structure of a wireless station roaming apparatus according to an embodiment of this application. As shown in FIG. 8, a wireless station roaming apparatus 40 may be disposed in a first AC, and the wireless station roaming apparatus 40 includes: a sending module 401, configured to: in response to a first wireless station STA accessing any wireless access point AP managed by the first AC, if it is determined that the first STA is not associated with the first AC, send a roaming query request to at least one neighboring AC respectively, where the neighboring AC is an AC whose signal coverage area is adjacent to a signal coverage area of the first AC; and a roaming module 402, configured to: if response information sent by a target neighboring AC for the roaming query request is received, allow the first STA to roam between the first AC and the target neighboring AC.

In some embodiments, the sending module 401 is specifically configured to: if it is determined that a type of the accessed AP is a border AP, or if it is determined that a type of the accessed AP is an inland AP and that the first STA accesses the accessed AP by using a reassociation request frame, send the roaming query request to all neighboring ACs of the first AC respectively.

In some embodiments, the sending module 401 is specifically configured to: if it is determined that a type of the accessed AP is a border AP, send the roaming query request to each neighboring AC having a mapping relationship with the accessed AP.

In some embodiments, if it is determined that the first STA is not associated with the first AC, the roaming module 402 is further configured to: if it is determined that a type of the accessed AP is an inland AP and that the first STA accesses the accessed AP by using an association request frame, associate with the first STA according to an initial association policy.

In some embodiments, the roaming module 402 is further configured to: after sending the roaming query request to the at least one neighboring AC respectively, if no response information is received within a second preset duration, associate with the first STA according to the initial association policy.

In some embodiments, the apparatus further includes a determining module, where the determining module is configured to: determine the at least one neighboring AC corresponding to the first AC by exchanging foreign AP information within a first preset duration after the first AC is powered on; and/or determine the at least one neighboring AC corresponding to the first AC by learning a roaming trajectory within the first preset duration after the first AC is powered on.

In some embodiments, a roaming domain virtual local area network VLAN includes a plurality of ACs, and the plurality of ACs include the first AC; and when determining the at least one neighboring AC corresponding to the first AC by exchanging the foreign AP information within the first preset duration after the first AC is powered on, the determining module is specifically configured to: perform the following operations within the first preset duration after the first AC is powered on, until the first preset duration is reached, where the following operations include: obtaining neighboring AP information reported by any first AP managed by the first AC, where the neighboring AP information includes AP identifiers respectively corresponding to neighboring APs identified by the first AP; when the neighboring AP information includes an identifier of a foreign AP that does not belong to the first AC, adding the identifier of the foreign AP to a foreign AP list, and periodically broadcasting the foreign AP list within the roaming domain VLAN; and if response information sent by a second AC for the foreign AP list is received, determining that the second AC is a neighboring AC, where the response information is sent by the second AC to the first AC when the second AC determines that the foreign AP list includes an identifier corresponding to an AP belonging to the second AC.

In some embodiments, a roaming domain VLAN includes a plurality of ACs, and the plurality of ACs include the first AC; and when determining the at least one neighboring AC corresponding to the first AC by learning the roaming trajectory within the first preset duration after the first AC is powered on, the determining module is specifically configured to: perform the following operations within the first preset duration after the first AC is powered on, until the first preset duration is reached, where the following operations include: in response to a second STA accessing any first AP managed by the first AC, if it is determined that the second STA is not associated with the first AC, broadcasting a roaming query request within the roaming domain VLAN; and if response information sent by a third AC for the roaming query request is received, determining that the third AC is a neighboring AC.

In some embodiments, the determining module is further configured to: if the response information sent by the third AC for the roaming query request is received within a second preset duration, roam with the third AC through a corresponding tunnel; or if the response information is not received within the second preset duration, associate with the second STA according to an initial association policy.

In some embodiments, the determining module is further configured to: in a process of determining the at least one neighboring AC corresponding to the first AC, determine a type of each first AP, and write the type of each first AP into an internal AP list, where the type is a border AP or an inland AP, both the inland AP and each neighboring AP of the inland AP belong to the first AC, and at least one of neighboring APs of the border AP does not belong to the first AC; and if a type of any first AP is a border AP, store a mapping relationship between the first AP and a corresponding neighboring AC, where the corresponding neighboring AC is an AC to which a neighboring AP that does not belong to the first AC and that is among neighboring APs of the first AP belongs.

In some embodiments, if the at least one neighboring AC corresponding to the first AC is determined by exchanging the foreign AP information, the determining module is specifically configured to: when the neighboring AP information reported by the first AP includes an identifier of a foreign AP that does not belong to the first AC, determine that the type of the first AP is a border AP; and/or when all APs identified in the neighboring AP information reported by the first AP belong to the first AC, or the neighboring AP information reported by the first AP includes an identifier of a foreign AP that does not belong to the first AC and no response information is received within a second preset duration, determine that the type of the first AP is an inland AP.

In some embodiments, if the at least one neighboring AC corresponding to the first AC is determined by learning the roaming trajectory, the determining module is specifically configured to: after the roaming query request is broadcast within the roaming domain VLAN, if response information sent by a third AC for the roaming query request is received within a second preset duration, determine that a type of the accessed AP is a border AP; and if no response information is received within the second preset duration, determine that the type of the accessed AP is an inland AP.

In some embodiments, the sending module 401 is specifically configured to: in response to a quantity of ACs included in the roaming domain VLAN being greater than a first preset threshold, send the roaming query request to the at least one neighboring AC respectively, where the neighboring AC is determined by exchanging the foreign AP information and by learning the roaming trajectory.

In some embodiments, the sending module 401 is specifically configured to: in response to the quantity of ACs included in the roaming domain VLAN being less than or equal to the first preset threshold and a configured sending manner being sending a request to a neighboring AC, send the roaming query request to the at least one neighboring AC respectively, where the neighboring AC is determined by learning the roaming trajectory.

In some embodiments, the roaming module 402 is further configured to: in response to the quantity of ACs included in the roaming domain VLAN being less than or equal to the first preset threshold and the configured sending manner being broadcasting a request in a roaming domain, broadcast the roaming query request in the roaming domain VLAN; and if response information sent by any AC for the roaming query request is received, roam with the AC through a corresponding tunnel.

The wireless station roaming apparatus 40 provided by this embodiment of this application may perform the technical solutions of the foregoing method embodiments. Implementation principles and technical effects thereof are similar to those of the corresponding method embodiments, and are not described herein.

An embodiment of this application further provides an access controller. FIG. 9 is a schematic diagram of a structure of an access controller according to an embodiment of this application. As shown in FIG. 9, the access controller 50 includes a processor 501 and a memory 502 communicatively connected to the processor 501.

The memory 502 stores computer-executable instructions; and the processor 501 executes the computer-executable instructions stored in the memory 502, to implement the wireless station roaming method provided in this application.

In this embodiment of this application, the memory 502 and the processor 501 are connected through a bus. The bus may be an industry standard architecture (English: Industry Standard Architecture, ISA for short) bus, a peripheral component interconnect (English: Peripheral Component Interconnect, PCI for short) bus, an extended industry standard architecture (English: Extended Industry Standard Architecture, EISA for short) bus, or the like. Buses may be classified into an address bus, a data bus, a control bus, and the like. The components shown herein, their connections and relationships, and their functions are merely examples, and are not intended to limit implementations of this application described and/or claimed herein. All the components are connected to each other by using different buses, and may be installed on a common main board or in other ways as needed.

In an exemplary embodiment, a computer-readable storage medium is further provided. The computer-readable storage medium stores computer-executable instructions. When executed by a processor, the computer-executable instructions are used to implement the wireless station roaming method provided in this application.

In an exemplary embodiment, a computer program product is further provided and includes a computer program. When the computer program in the computer program product is executed by a processor, the wireless station roaming method provided in this application is implemented.

It should be noted that, for brief description, the foregoing method embodiments are represented as a series of actions. However, a person skilled in the art should appreciate that this application is not limited to the described order of the actions because some steps may be performed in other orders or simultaneously according to this application. It should be further appreciated by a person skilled in the art that embodiments described in this specification all belong to optional embodiments, and the involved actions and modules are not necessarily required by this application.

It should be further noted that although various steps in the flowchart are displayed in sequence as indicated by arrows, these steps are not necessarily performed in sequence according to the order indicated by the arrows. Unless otherwise clearly stated in this specification, an execution order of these steps is not strictly limited, and the steps may be performed in other orders. Moreover, at least some steps in the flowchart may include a plurality of substeps or a plurality of stages, and these substeps or stages are not necessarily performed at the same time, but may be performed at different times. An execution order of the substeps or stages is not necessarily sequential execution. Instead, the substeps or stages may be performed in turn or alternately with at least a part of other steps or substeps or stages of other steps.

It should be understood that the foregoing apparatus embodiments are merely illustrative, and the apparatus of this application may also be implemented in other ways. For example, division into units/modules in the foregoing embodiments is merely logical function division, and there may be other division manners in actual implementation. For example, a plurality of units, modules, or components may be combined or integrated into another system, or some features may be ignored or may not be performed.

In addition, unless otherwise specified, functional units/modules in embodiments of this application may be integrated into one unit/module, or each of the units/modules may exist alone physically, or two or more units/modules are integrated together. The integrated unit/module may be implemented in a form of hardware, or may be implemented in a form of a software program module.

If the integrated unit/module is implemented in the form of hardware, the hardware may be a digital circuit, an analog circuit, or the like. Physical implementation of a hardware structure includes, but is not limited to, a transistor, a memristor, and the like. Unless otherwise specified, the processor may be any appropriate hardware processor, for example, a central processing unit (English: Central Processing Unit, CPU for short), a graphics processing unit (English: Graphics Processing Unit, GPU for short), an application-specific integrated circuit (English: Application Specific Integrated Circuit, ASIC for short), a digital signal processor (English: Digital Signal Processor, DSP for short), a programmable logic device (English: Programmable Logic Device, PLD for short), a field-programmable gate array (English: Field Programmable Gate Array, FPGA for short), a controller, a microcontroller, a microprocessor, or another electronic component. Unless otherwise specified, the memory may be implemented by using any type of volatile or nonvolatile storage device, or a combination thereof, for example, any medium that may store program code, such as a USB flash drive, a random-access memory (English: Random-Access Memory, RAM for short), a static random-access memory (English: Static Random-Access Memory, SRAM for short), a dynamic random-access memory (English: Dynamic Random-Access Memory, DRAM for short), an enhanced dynamic random-access memory (English: Enhanced Dynamic Random-Access Memory, EDRAM for short), an electrically erasable programmable read-only memory (English: Electrically Erasable Programmable Read-Only Memory, EEPROM for short), an erasable programmable read-only memory (English: Erasable Programmable Read-Only Memory, EPROM for short), a programmable read-only memory (English: Programmable read-only memory, PROM for short), a read-only memory (English: Read-Only Memory, ROM for short), a high-bandwidth memory (English: High-Bandwidth Memory, HBM for short), or a hybrid memory cube (English: Hybrid Memory Cube, HMC for short).

When the integrated unit/module is implemented in the form of a software program module and sold or used as an independent product, the integrated unit/module may be stored in a computer-readable memory. Based on such an understanding, the technical solutions of this application essentially, or the part contributing to the prior art, or all or some of the technical solutions may be implemented in the form of a software product. The computer software product is stored in a memory and includes several instructions for instructing an access controller to perform all or some of the steps of the methods described in embodiments of this application.

In the foregoing embodiments, the description of each embodiment has a respective focus. For a part that is not described in detail in an embodiment, refer to related descriptions in other embodiments. Technical features in the foregoing embodiments may be combined in any manner. For brevity of description, not all possible combinations of the technical features in the foregoing embodiments are described. However, as long as there is no contradiction in combinations of these technical features, all the combinations shall be considered to fall within the scope described in this specification.

A person skilled in the art will easily think of other implementation solutions of this application after considering the specification and practicing the present invention disclosed herein. This application is intended to cover any variations, uses, or adaptive changes of this application. These variations, uses, or adaptive changes comply with the general principles of this application and include common knowledge or conventional technical means in the technical field that are not disclosed in this application. The specification and the embodiments are considered as exemplary only. The true scope and spirit of this application are indicated by the claims.

It should be understood that this application is not limited to the precise structure described above and shown in the drawings, and various modifications and changes can be made without departing from the scope of this application. The scope of this application is defined only by the appended claims.

## Claims

1. A wireless station roaming method, wherein the method is applied to a first access controller AC, and the method comprises:
in response to a first wireless station STA accessing a wireless access point AP managed by the first AC, when it is determined that the first STA is not associated with the first AC, sending a roaming query request to at least one neighboring AC respectively, wherein the at least one neighboring AC is an AC whose signal coverage area is adjacent to a signal coverage area of the first AC; and
when response information sent by a target neighboring AC is received, allowing the first STA to roam between the first AC and the target neighboring AC.

2. The method according to claim 1, wherein the sending the roaming query request to the at least one neighboring AC respectively comprises:
when it is determined that a type of the accessed AP is a border AP, or when it is determined that a type of the accessed AP is an inland AP and that the first STA accesses the accessed AP by using a reassociation request frame, sending the roaming query request to all neighboring ACs of the first AC respectively.

3. The method according to claim 1, wherein the sending the roaming query request to the at least one neighboring AC respectively comprises:
when it is determined that a type of the accessed AP is a border AP, sending the roaming query request to each neighboring AC having a mapping relationship with the accessed AP.

4. The method according to claim 1, wherein the method further comprises:
when it is determined that a type of the accessed AP is an inland AP and that the first STA accesses the accessed AP by using an association request frame, associating with the first STA according to an initial association policy.

5. The method according to any one of claims 1 to 4, wherein after the sending the roaming query request to the at least one neighboring AC respectively, the method further comprises:
when no response information is received within a second preset duration, associating with the first STA according to an initial association policy.

6. The method according to claim 1, further comprising:
determining the at least one neighboring AC corresponding to the first AC by exchanging foreign AP information within a first preset duration after the first AC is powered on;
and/or
determining the at least one neighboring AC corresponding to the first AC by learning a roaming trajectory within a first preset duration after the first AC is powered on.

7. The method according to claim 6, wherein a roaming domain virtual local area network VLAN comprises a plurality of ACs, and the plurality of ACs comprise the first AC; and the determining the at least one neighboring AC corresponding to the first AC by exchanging the foreign AP information within the first preset duration after the first AC is powered on comprises:
performing the following operations within the first preset duration after the first AC is powered on, until the first preset duration is reached, wherein the following operations comprise:
obtaining neighboring AP information reported by a first AP managed by the first AC, wherein the neighboring AP information comprises AP identifiers respectively corresponding to neighboring APs identified by the first AP;
when the neighboring AP information comprises an identifier of a foreign AP that does not belong to the first AC, adding the identifier of the foreign AP to a foreign AP list, and broadcasting the foreign AP list within the roaming domain VLAN; and
when response information sent by a second AC for the foreign AP list is received, determining that the second AC is a neighboring AC, wherein the response information is sent by the second AC to the first AC when the second AC determines that the foreign AP list comprises an identifier corresponding to an AP belonging to the second AC.

8. The method according to claim 6, wherein a roaming domain VLAN comprises a plurality of ACs, and the plurality of ACs comprise the first AC; and the determining the at least one neighboring AC corresponding to the first AC by learning the roaming trajectory within the first preset duration after the first AC is powered on comprises:
performing the following operations within the first preset duration after the first AC is powered on, until the first preset duration is reached, wherein the following operations comprise:
in response to a second STA accessing a first AP managed by the first AC, when it is determined that the second STA is not associated with the first AC, broadcasting the roaming query request within the roaming domain VLAN; and
when the response information sent by a third AC is received, determining that the third AC is a neighboring AC.

9. The method according to claim 8, further comprising:
when the response information sent by the third AC is received within a second preset duration, allowing the second STA to roam between the first AC and the third AC; and
when the response information is not received within the second preset duration, associating with the second STA according to an initial association policy.

10. The method according to claim 7, further comprising:
in a process of determining the at least one neighboring AC corresponding to the first AC, determining a type of the first AP, and writing the type of the first AP into an internal AP list, wherein the type is a border AP or an inland AP, both the inland AP and each neighboring AP of the inland AP are APs managed by the first AC, and at least one of neighboring APs of the border AP is not an AP managed by the first AC; and
when the type of the first AP is a border AP, storing a mapping relationship between the first AP and a corresponding neighboring AC, wherein the corresponding neighboring AC is an AC to which a neighboring AP that does not belong to the first AC and that is among neighboring APs of the first AP belongs.

11. The method according to claim 10, wherein when the at least one neighboring AC corresponding to the first AC is determined by exchanging the foreign AP information, the determining the type of the first AP in the process of determining the at least one neighboring AC corresponding to the first AC comprises:
when the neighboring AP information reported by the first AP comprises an identifier of a foreign AP that is not managed by the first AC, determining that the type of the first AP is a border AP; and/or
when AP identifiers in the neighboring AP information reported by the first AP each belong to APs managed by the first AC, or the neighboring AP information reported by the first AP comprises an identifier of a foreign AP that does not belong to the first AC and no response information is received within a second preset duration, determining that the type of the first AP is an inland AP.

12. The method according to claim 10, wherein when the at least one neighboring AC corresponding to the first AC is determined by learning the roaming trajectory, the determining the type of each first AP in the process of determining the at least one neighboring AC corresponding to the first AC comprises:
after the roaming query request is broadcast within the roaming domain VLAN, when response information sent by a third AC is received within a second preset duration, determining that a type of the accessed AP is a border AP; and
when no response information is received within the second preset duration, determining that the type of the accessed AP is an inland AP.

13. The method according to any one of claims 1 to 12, wherein the sending the roaming query request to the at least one neighboring AC respectively comprises:
in response to a quantity of ACs comprised in the roaming domain VLAN being greater than a first preset threshold, sending the roaming query request to the at least one neighboring AC respectively, wherein the neighboring AC is determined by exchanging the foreign AP information and by learning the roaming trajectory.

14. The method according to claim 13, wherein the sending the roaming query request to the at least one neighboring AC respectively comprises:
in response to the quantity of ACs comprised in the roaming domain VLAN being less than or equal to the first preset threshold and a configured sending manner being sending a request to a neighboring AC, sending the roaming query request to the at least one neighboring AC respectively, wherein the neighboring AC is determined by learning the roaming trajectory.

15. The method according to claim 14, further comprising:
in response to the quantity of ACs comprised in the roaming domain VLAN being less than or equal to the first preset threshold and the configured sending manner being broadcasting a request in a roaming domain, broadcasting the roaming query request in the roaming domain VLAN; and
when response information sent by a fourth AC is received, allowing the first STA to roam between the first AC and the fourth AC.

16. The method according to any one of claims 1 to 15, wherein the receiving the response information sent by the target neighboring AC comprises:
receiving the response message sent by the target neighboring AC through a tunnel between the first AC and the target neighboring AC.

17. The method according to any one of claims 1 to 16, wherein the allowing the first STA to roam between the first AC and the target neighboring AC comprises:
establishing, by the first AC, an association with the first STA based on the response message, to allow the first STA to roam between the first AC and the target neighboring AC.

18. A wireless station roaming apparatus, wherein the apparatus is disposed in a first access controller AC, and the apparatus comprises:
a sending module, configured to: in response to a first wireless station STA accessing a wireless access point AP managed by the first AC, when it is determined that the first STA is not associated with the first AC, send a roaming query request to at least one neighboring AC respectively, wherein the at least one neighboring AC is an AC whose signal coverage area is adjacent to a signal coverage area of the first AC; and
a roaming module, configured to: when response information sent by a target neighboring AC is received, allow the first STA to roam between the first AC and the target neighboring AC.

19. An access controller, comprising a processor and a memory communicatively connected to the processor, wherein
the memory stores computer-executable instructions; and
the processor executes the computer-executable instructions stored in the memory, to implement the wireless station roaming method according to any one of claims 1 to 17.

20. A computer-readable storage medium, wherein the computer-readable storage medium stores computer-executable instructions, and when executed by a processor, the computer-executable instructions are used to implement the wireless station roaming method according to any one of claims 1 to 17.
